# EUROPÄISCHE PATENTSCHRIFT

(11) **EP 3 256 364 B1**
(45) Veröffentlichungstag und Bekanntmachung des Hinweises auf die Patenterteilung: **31.10.2018**
(21) Anmeldenummer: 16701416.6
(22) Anmeldetag: 23.01.2016
(51) Int. Cl.: B62D 5/04

(54) **VERFAHREN ZUM ANLERNEN ZULÄSSIGER LENKWINKEL BEI EINER LENKEINRICHTUNG EINES KRAFTFAHRZEUGS**
METHOD FOR LEARNING AN ADMISSIBLE STEERING ANGLE BY A VEHICLE STEERING DEVICE
PROCÉDÉ POUR L'APPRENTISSAGE D'UN ANGLE DE BRAQUAGE ADMISSIBLE D'UN DISPOSITIF DE DRIRECTION DE VÉHICULE

(30) Priorität: 11.02.2015 DE 102015001764
(43) Veröffentlichungstag der Anmeldung: 20.12.2017
(73) Patentinhaber: Audi AG, 85045 Ingolstadt (DE)
(72) Erfinder: SAAL, Andre, 85114 Buxheim (DE); HERMAN, Jakob, 80337 München (DE); WEIGL, Bastian, 85055 Ingolstadt (DE)
(86) Internationale Anmeldenummer: PCT/EP2016/000119
(87) Internationale Veröffentlichungsnummer: WO 2016/128108

(56) Entgegenhaltungen:
- EP-A1- 2 647 546
- DE-A1-102011 105 064

## Beschreibung

Die Erfindung betrifft ein Verfahren zum Anlernen der zulässigen Lenkwinkel bei einer Lenkeinrichtung eines Kraftfahrzeugs, wobei am Kraftfahrzeug mechanische und/oder softwareseitige, den Lenkwinkel begrenzende Anschläge vorhanden oder temporär angebracht sind, wobei einerseits die auf das Lenkrad aufgebrachte Lenkkraft und andererseits der am Eingang des Lenkgetriebes anliegende Lenkwinkel direkt oder indirekt mittels Sensoren erfasst und ausgewertet werden. Weiterhin gehört es zur Erfindung ein Kraftfahrzeug anzugeben, in welchem eine Steuereinrichtung verbaut ist, mit deren Hilfe das Verfahren zum Anlernen der zulässigen Lenkwinkel ausführbar ist.

In jüngerer Vergangenheit sind zahlreiche Vorschläge bekannt geworden, bei Kraftfahrzeugen aktive Vorderachslenkung einzusetzen. Diese ermöglichen einen vom Lenkradwinkel unabhängigen Lenkeingriff an der Vorderachse. In den heute serienmäßig verfügbaren Fahrzeugen sind sogenannte Überlagerungslenksysteme verbaut. Bei diesem speziellen Typ von aktiver Lenkung wird mittels eines Überlagerungsgetriebes einem mittels Lenkrad eingestellten Lenkwinkel ein Winkel überlagert, also aufgeprägt. Der Lenkwinkel am Eingang des Lenkgetriebes entspricht dann nicht mehr dem durch das Lenkrad eingestellten Winkel. Durch diese Maßnahme ist einerseits eine stufenlose Anpassung der Lenkübersetzung möglich, so dass zum Beispiel zum Rangieren bei geringen Geschwindigkeiten eine direkte Übersetzung eingestellt werden kann, wodurch beim Parken weniger Lenkradumdrehungen benötigt werden, während bei Autobahnfahrten eine indirekte Übersetzung eingestellt werden kann, wodurch das Fahrzeug feinfühliger kontrollierbar ist. Andererseits erlaubt die Überlagerung auch schnelle fahrdynamische Eingriffe. Darunter ist zu verstehen, dass während der Fahrt, weitgehend unabhängig von Lenkeingriffen des Fahrzeuglenkers, der Radwinkel verändert werden kann, was eine schnell ansprechende Fahrdynamikregelung ermöglicht.

Fahrzeuge, die Überlagerungslenkungen enthalten, sind hinsichtlich des Lenksystems erhöhten Toleranzanforderungen in der Fertigung und Montage unterworfen, bzw. müssen hinsichtlich der zulässigen Lenkwinkel weiter eingeschränkt werden, als dies bei Fahrzeugen ohne Überlagerungslenkung der Fall ist. Diese Maßnahmen sollen verhindern, dass bei unsymmetrischen Endanschlägen am Lenkgetriebe nicht eine ungewollte Zustellung hervorgerufen wird, was gegebenenfalls zu einem Zucken am Lenkrad führt.

Direkt für den Fahrer erkennbare Folge eines eingeschränkten Lenkwinkels ist, dass der tatsächlich vorhandene maximale Lenkwinkel nicht vollständig ausgenutzt werden kann, was sich in einem schlechteren Handling zum Beispiel beim Rangieren bemerkbar macht.

In Verbindung mit konventionellen Servolenkungen ohne Lenkwinkelüberlagerung ist es bekannt, die Lenkendanschläge durch Lenkbewegungen zu erfassen. So beschreibt die DE 10 2011 105 064 A1 als nächstliegender Stand der Technik ein Verfahren zur Ermittlung und Erkennung von Endanschlägen einer Lenkeinrichtung eines Kraftfahrzeuges, die einen Servomotor aufweist. Dabei werden die tatsächlichen mechanischen Endanschläge der Lenkeinrichtung erfasst und, nachdem die Endanschläge erfasst sind, softwaregesteuerte Endanschläge festgelegt. Ferner ist ein Speicher vorgesehen, auf den eine Steuereinrichtung Zugriff hat und in dem Lenkparameter für unterschiedliche Fahrdynamikparameter und Informationen über wenigstens einen zulässigen Lenkwinkel in jede Lenkrichtung gespeichert sind. In einer mit Hilfe der Steuereinrichtung ablaufenden Anlernroutine wird manuell eine Lenkkraft in beiden Lenkrichtungen auf das Lenkrad aufgebracht und deren Wert wird direkt oder indirekt erfasst. Wenn die aufgebrachte Lenkkraft jeweils einen vorgegebenen Wert übersteigt, wird der am Eingang des Lenkgetriebes anliegende Lenkwinkel als absoluter maximaler Lenkwinkel in die jeweilige Lenkrichtung definiert und im Speicher gespeichert.

Weiter ist es aus der DE 10 2011 122 772 A1 bekannt, eine Lenkeinrichtung eines Räderfahrzeugs, insbesondere eines Personen- oder Lastkraftwagens, die einen Lenkantrieb aufweist, in eine erste Richtung zu verstellen und einen ersten maximalen Stellweg in der ersten Richtung zu erfassen und einen ersten Grenzwert auf Basis dieses erfassten ersten maximalen Stellweges vorzugeben und den Stellweg der Lenkeinrichtung in der ersten Richtung auf Basis des ersten Grenzwertes elektrisch zu begrenzen, wobei der erste maximale Stellweg durch den Lenkantrieb erfasst wird. Analog wird in Bezug auf die zweite (Lenk-)Richtung verfahren.

Aus der DE 10 2012 022 900 A1 ist schließlich ein Verfahren und eine Vorrichtung zum Einstellen eines Software-Endanschlags eines Lenksystems eines Kraftfahrzeugs während des Fahrbetriebs bekannt, wobei eine Lenkungsvorrichtung ein Überlenken des Software-Endanschlags bei Erfüllen von vorgegebenen Fahrbedingungen ermöglicht, wobei ein Wert einer erfolgten Überlenkung des Software-Endanschlags mittels einer Lenkwinkelsensorik erfasst wird, eine neue Position des Software-Endanschlags auf Basis des erfassten Wertes durch Prozessormittel bestimmt wird und der Software-Endanschlag auf die neue Position durch Steuerungsmittel eingestellt wird.

Aus der DE 102 21 721 A1 ist ein Kraftfahrzeug mit einem Lenksystem sowie einem Anschlag zum Begrenzen des maximalen Einschlagwinkels bekannt. Dabei kann die Größe des maximalen Einschlagwinkels in Abhängigkeit von Fahrparametern, wie z.B. der Fahrgeschwindigkeit oder der Quer- und Längsbeschleunigung, bestimmt werden.

Gemeinsam ist dem bekannten Stand der Technik, dass sich die beschriebenen Vorgehensweisen für eine Überlagerungslenkung nicht eignen.

Ausgehend von dem bekannten Stand der Technik ist es Aufgabe der Erfindung, ein Verfahren bereitzustellen, das es gestattet, bei Fahrzeugen mit Überlagerungslenkung, durch manuelle Lenkeingriffe bis zum mechanischen oder softwareseitigen Anschlag, zulässige Lenkwinkel anzulernen, also zu definieren und abzuspeichern. Weiter gehört es zur Aufgabe, ein Kraftfahrzeug bereitzustellen, das das erfindungsgemäße Verfahren ausführen kann.

Die Lösung der Aufgabe erfolgt durch ein Verfahren mit den Merkmalen des Anspruchs 1 sowie durch ein Kraftfahrzeug mit den Merkmalen des Anspruchs 11. Vorteilhafte Weiterbildungen ergeben sich aus den Unteransprüchen.

Das Verfahren zum Anlernen zulässiger Lenkwinkel bei einer Lenkeinrichtung eines Kraftfahrzeugs geht davon aus, dass am Kraftfahrzeug mechanische und/oder softwareseitige, den Lenkwinkel begrenzende Anschläge vorhanden oder temporär angebracht sind. Weiter wird davon ausgegangen, dass einerseits die auf das Lenkrad aufgebrachte Lenkkraft und andererseits der am Eingang des Lenkgetriebes anliegende Lenkwinkel direkt oder indirekt mittels Sensoren erfasst und ausgewertet werden.

Erfindungsgemäß wird das Verfahren in Verbindung mit einer Lenkung eingesetzt, die eine Überlagerungslenkung ist, wobei dem durch das Betätigen des Lenkrades erzeugten Lenkwinkel, gesteuert durch eine Steuereinrichtung, mittels eines Überlagerungsgetriebes ein Überlagerungslenkwinkel aufgeprägt ist, der den Lenkwinkel abhängig von gemessenen Fahrdynamikparametern vergrößert oder verkleinert.

Dazu ist ein Speicher vorgesehen, auf den die die Überlagerungslenkung steuernde Steuereinrichtung Zugriff hat und in dem Lenkparameter für unterschiedliche Fahrdynamikparameter gespeichert sind. Dabei sind in diesem Speicher Informationen über wenigstens einen zulässigen Lenkwinkel für jede Lenkrichtung gespeichert. Während einer mit Hilfe der Steuereinrichtung ablaufenden Anlernroutine wird auf das Lenkrad, bevorzugt mehrmals, in beiden Lenkrichtungen manuell eine Lenkkraft aufgebracht und der Wert der aufgebrachten Kraft direkt oder indirekt erfasst. Dann, wenn die aufgebrachte Lenkkraft jeweils einen vorgegebenen Wert übersteigt und - erfindungsgemäß - nach Verstreichen einer vorgegebenen Zeitspanne wird der am Eingang des Lenkgetriebes anliegende Lenkwinkel direkt oder indirekt erfasst und als absoluter maximaler Lenkwinkel in die jeweilige Lenkrichtung definiert. Nach Ermittlung der absoluten maximalen Lenkwinkel in beiden Drehrichtungen des Lenkrades, wird jeweils wenigstens ein zulässiger Lenkwinkel für jede Lenkrichtung errechnet, den gespeicherten Lenkparametern zugeordnet und im Speicher gespeichert. Es stehen damit, unabhängig von den die Lage der mechanischen Endanschläge beeinflussenden etwaigen Toleranzen, zulässige Lenkwinkel zur Verfügung, die den freien Lenkbereich vorteilhaft maximal ausnutzen, ohne dass es zu unkomfortablen haptisch wahrnehmbaren Rückwirkungen kommt.

Die vorstehend erwähnten Lenkparameter sind Einstellgrößen für mögliche Überlagerungswinkel des Überlagerungsgetriebes, wobei jeweils Lenkparameter für vordefinierte Fahrdynamikparameter vorliegen.

Unter dem Begriff Fahrdynamikparameter soll im Zusammenhang mit Überlagerungslenkungen und der Problemstellung, die der Erfindung zugrunde liegt, an erster Stelle die Fahrzeuggeschwindigkeit und/oder deren Änderung der Lenkradwinkel und/oder dessen Änderung der Radwinkel verstanden werden.

In Weiterbildung der verfahrensgemäßen Vorgehensweise ist es von Vorteil, die zulässigen Lenkwinkel den Lenkparametern direkt zuzuordnen. Dies schafft die Voraussetzung, dass dann wenn unterschiedliche Lenkparameter für unterschiedliche Fahrdynamikparameter, zum Beispiel für unterschiedliche Geschwindigkeiten des Kraftfahrzeugs gespeichert sind, die errechneten zulässigen Lenkwinkel zu den gespeicherten Lenkparametern abgespeichert werden können. Wenn die errechneten zulässigen Lenkwinkel für unterschiedliche Fahrdynamikparameter, zum Beispiel für unterschiedliche Geschwindigkeiten unterschiedlich sind, lassen sich die gespeicherten zulässigen Lenkwinkel vorteilhaft zusammen mit den gespeicherten Lenkparametern direkt abrufen.

Um Fehler bei der Erfassung der maximalen Lenkwinkel zu vermeiden, kann es von Vorteil sein, vor dem Erfassen eines absoluten maximalen Lenkwinkels zu prüfen, ob der erfasste Lenkwinkel in einem vordefinierten Winkelbereich liegt. Erst in dem Fall, dass der erfasste Lenkwinkel in dem vordefinierten Winkelbereich liegt und nach Verstreichen einer vordefinierten Zeitspanne, wird der am Eingang des Lenkgetriebes anliegende Lenkwinkel von der Steuereinrichtung durch Abfragen eines Drehwinkelsensors erfasst und als absoluter maximaler Lenkwinkel definiert. Auf diese Weise wird vorteilhaft vermieden, dass eine zum Beispiel durch Haftreibung der Räder oder durch ein Hindernis auftretende erhöhte Lenkkraft als Erreichen des mechanischen Endanschlags der Lenkung gewertet wird. Kommt es zu einer erhöhten Lenkkraft und liegt der erfasste Lenkwinkel nicht in dem vordefinierten Winkelbereich, wird die Anlernroutine von der Steuereinrichtung abgebrochen.

Zur Erfassung der vordefinierten Zeitspanne ist es vorteilhaft, einen Zähler zu verwenden, wobei der Zählerstand durch die Steuereinrichtung in einer Schleife inkrementiert oder dekrementiert und mit einem gespeicherten Referenzwert bzw. dem Wert "Null" verglichen wird. Bei Erreichen des Referenzwertes (bei Inkrementieren des Zählers) bzw. dem Erreichen des Wertes "Null" (bei Dekrementieren des Zählers) wird dann der am Ausgang des Überlagerungsgetriebes anliegende Lenkwinkel als absoluter maximaler Lenkwinkel definiert. Im Falle des Dekrementierens des Zählers wurde dieser natürlich zu Beginn mit einem gespeicherten Referenzwert geladen.

Während der Durchführung der Anlernroutine müssen maximale Lenkeinschläge gefahrlos realisierbar sein, dies ist nur bei geringen Fahrzeuggeschwindigkeiten möglich. Es ist daher vorteilhaft, die Fahrzeuggeschwindigkeit während der Anlernroutine kleiner 20 Kilometer pro Stunde, bevorzugt kleiner 10 Kilometer pro Stunde zu halten, wobei die Geschwindigkeit "Null Kilometer pro Stunde" zu diesem Bereich zählt.

Zum Zweck der Überprüfbarkeit der erfassten maximalen Lenkwinkel und als weitere Absicherung kann es von Vorteil sein, nach dem Erfassen der absoluten maximalen Lenkwinkel diese, vor Beendigung der Anlernroutine, mittels einer Anzeigeeinrichtung anzuzeigen. Zum einen lassen sich auf diese Weise Tendenzen hinsichtlich wirkender Toleranzen erkennen, was für den Produktionsprozess von großer Bedeutung ist, andererseits ermöglicht die Anzeige eine Überprüfung der korrekten Erfassung der maximalen Lenkwinkel durch Produktions- oder Servicepersonal.

Zur Erfassung der Lenkkraft besteht vorteilhaft die Möglichkeit, eine elektrische Größe des Überlagerungslenkungsmotors zu verwenden. So kann beispielsweise der von diesem aufgenommene Strom in der Steuereinrichtung gemessen und daraus die Lenkkraft ermittelt werden. Dabei ist der erfasste Wert bei konstantem Lenkwinkel direkt proportional zum Lenkmoment und damit zur Lenkkraft die auf das Lenkrad aufgebracht wird.

Zur Erfassung des Lenkwinkels ist es vorteilhaft, den Drehwinkelsensor am Ausgang des Überlagerungsgetriebes zu nutzen, der bei einer Überlagerungslenkung als Rückmelder für das korrekte Einstellen des Lenkwinkels im Fahrbetrieb ohnehin vorhanden ist.

Es ist ebenfalls ein Drehwinkelsensor am Eingang des Überlagerungslenkungsgetriebes notwendig. Dieser dient in Verbindung mit dem Drehwinkelsensor am Ausgang zur Bestimmung des gesamten Winkels am Lenkgetriebe bzw. den Rädern.

Wird ein Überlagerungsgetriebe in der Lenksäule verwendet, so muss der gesamte verwendete Winkel am Lenkgetriebe oder an den Rädern um einen Überlagerungswinkelanteil resultierend aus der Torsion der Lenksäule unter einem Handmoment korrigiert werden. Dies ist notwendig, damit im mechanischen/softwareseitigen Endanschlag nur der tatsächliche Lenkwinkel bis zum Erreichen des Endanschlages für die Anlernroutine verwendet wird.

Ferner betrifft die Erfindung ein Kraftfahrzeug mit einer Überlagerungslenkung, die ein Überlagerungsgetriebe umfasst, wobei eine Steuereinrichtung und ein Speicher zur Durchführung des Verfahrens nach einem der Ansprüche 1 bis 10 vorgesehen sind.

Es ist darauf hinzuweisen, dass die vorstehend und auch nachfolgend beschriebenen Systemkomponenten nicht zwangsläufig als Hardwarekomponenten ausgeführt sein müssen. Es ist vielmehr heute üblich, derartige Komponenten als Softwareroutinen auszubilden, die mittels Recheneinheiten ausgeführt werden und sich vorhandener Hardwarekomponenten wie Sensoren, Aktuatoren, usw. bedienen. Heute in Gebrauch befindliche Fahrzeuge verfügen in der Regel über mehrere solcher Recheneinheiten, die zur Datenübertragung miteinander vernetzt sind und unterschiedlichste Steuer-, Regel-, Analyse-, Überwachungs- und Datenübertragungsroutinen ausführen. Ebenso sind in heute üblichen Fahrzeugen eine Vielzahl von Sensoren und Aktuatoren eingesetzt, die sich zum Teil für unterschiedliche Zwecke nutzen lassen. Die Begriffe Sensoren und Aktuatoren sind dabei in ihrer allgemeinsten Bedeutung zu verstehen.

Weitere Ausgestaltungen und Vorteile der Erfindung werden nachfolgend anhand der Zeichnung näher erläutert, es zeigt:
- Fig. 1: eine Prinzipdarstellung einer Überlagerungslenkung,
- Fig. 2: eine erste vereinfachte Darstellung eines Rades am Lenkendanschlag,
- Fig. 3: eine zweite vereinfachte Darstellung eines Rades am Lenkendanschlag, und
- Fig. 4: ein vereinfachtes Ablaufdiagramm des Verfahrens.

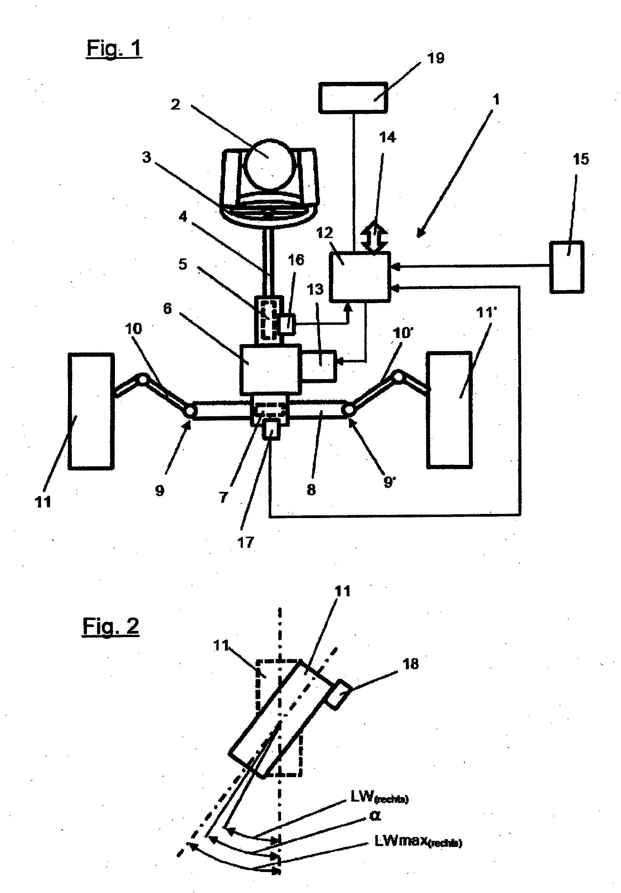

Die Darstellung in Fig. 1 zeigt eine in einem Kraftfahrzeug angeordnete Überlagerungslenkung 1, vereinfacht dargestellt. Die Lenkbewegungen des Fahrers 2 werden über das Lenkrad 3 und die Lenksäule 4 auf den Eingang 5 des Überlagerungsgetriebes 6 übertragen. Ausgangsseitig des Überlagerungsgetriebes 6 ist das Lenkgetriebe angeordnet. Es weist ein Ritzel 7 auf, das auf eine Zahnstange 8 wirkt deren beide Enden 9, 9' über Lenkgestänge 10, 10' mit den beiden lenkbaren Vorderrädern 11, 11' verbunden sind.

Abweichend vom Beispiel in Fig. 1 kann das Überlagerungsgetriebe auch in der Lenksäule verbaut sein und ist dann über eine Lenkzwischenwelle mit dem Lenkgetriebe verbunden.

Zur Steuerung des Überlagerungsgetriebes 6 ist eine Steuereinrichtung 12 vorgesehen, die über einen Aktuator 13, zum Beispiel einen Elektromotor, auf das Überlagerungsgetriebe 6 wirkt und den Fahrdynamikparameter bezogenen, korrekten Überlagerungswinkel einstellt. Zum Steuern des Überlagerungswinkels hat die Steuereinrichtung 12 einerseits über ein Bussystem 14 Zugriff auf die aktuellen Fahrdynamikdaten, die über im bzw. am Kraftfahrzeug angeordnete Sensoren (nicht dargestellt) gewonnen werden. Andererseits sind für unterschiedliche Fahrdynamikdaten in einem von der Steuereinrichtung 12 abrufbaren Speicher 15 Daten zu unterschiedlichen Überlagerungswinkeln gespeichert. Adressiert werden die Daten zu den Überlagerungswinkeln mit Hilfe der Fahrdynamikdaten, derart, dass bestimmten Fahrdynamikdaten bestimmte Daten zu den Überlagerungswinkeln speichertechnisch zugeordnet sind.

Weiterhin ist ein Drehmomentsensor 16 vorgesehen, der das Drehmoment sensiert, das vom Fahrer 2 auf das Lenkrad 3 und über dieses und die Lenksäule 4 auf den Eingang 5 des Überlagerungsgetriebes 6 aufgebracht wird. Der Drehmomentsensor 16 ist von der Steuereinheit 12 abfragbar.

Zur Rückmeldung für den tatsächlich mittels des Überlagerungsgetriebes 6 eingestellten Lenkausgangswinkel ist ein Drehwinkelsensor 17 vorgesehen. Dabei handelt es sich vorteilhaft um einen codierten Inkremental-Drehgeber, der sowohl die Drehrichtung als auch den Drehwinkel am Ausgang des Überlagerungsgetriebes sensiert. Der Drehwinkelsensor 17 ist von der Steuereinrichtung 12 abfragbar.

Abweichend vom dargestellten Beispiel kann natürlich auch der integrierte Drehwinkelsensor des Lenkgetriebes verwendet werden, wenn dieses einen solchen aufweist.

Das Abfragen des Drehmomentsensors 16, sowie des Drehwinkelsensors 17 kann über separate Verbindungen geschehen, wie in der Fig. 1 vereinfachend dargestellt, oder über Bussysteme, wie sie heute in Kraftfahrzeugen zur Verfügung stehen. Entsprechendes gilt natürlich auch für den Speicher 15. Es ist weiter anzumerken, dass es sich bei der Steuereinrichtung 12 nicht um eine nur für diesen Zweck eigens vorhandene Hardwareeinrichtung handeln muss, es ist vielmehr heute üblich, unterschiedlichste Steuerabläufe quasi parallel auf Recheneinheiten mittels Steuerroutinen auszuführen, also eine Steuereinrichtung mittels eines Steuerprogramms temporär auf einer Recheneinheit auszubilden. Was vorstehend und nachfolgend beschrieben ist, soll in diesem Zusammenhang verstanden werden.

Weiter ist die Steuereinrichtung 12 zur Ausgabe von Meldungen mit einer Anzeige 19 verbunden.

Der Vollständigkeit halber ist noch zu erwähnen, dass üblicherweise bei heutigen Kraftfahrzeugen die Lenkkraft unterstützende Servoeinrichtungen verbaut sind, die jedoch in dem hier beschriebenen Zusammenhang keinen Einfluss haben und daher in der Fig. 1 nicht dargestellt und demzufolge auch nicht näher beschrieben sind.

Die Darstellung in Fig. 2 zeigt das in der Fig. 1, vom Fahrer 2 aus gesehen rechts, abgebildete Vorderrad 11 in einer ersten Position, in Neutralstellung, also mit dem Lenkwinkel "Null" (gestrichelte Darstellung). Wird das Rad 11 nun, durch Drehen des Lenkrades 3 (Fig. 1) nach rechts, ebenfalls nach rechts gedreht (durchgezogene Darstellung), stößt es an einen den Lenkwinkel begrenzenden Anschlag 18. Der zugehörige Lenkwinkel wird hier als maximaler Lenkwinkel LW_{max(rechts)} bezeichnet. Der Anschlag 18 kann ein konstruktiv am Kraftfahrzeug ausgeführter Anschlag oder ein temporär an diesem angebrachter Anschlag oder ein Softwareanschlag sein. Unter einem Softwareanschlag wird dabei verstanden, dass bei einem vorgegebenen Lenkwinkel in der Lenkeinrichtung ein gegen die Lenkkraft des Fahrers 2 gerichtetes Moment aufgebracht wird, das einen mechanischen Anschlag simuliert. Weiter muss der Anschlag 18 nicht zwangsläufig am Rad 11 angreifen, wie in der Fig. 1 dargestellt, sondern kann auch an anderer Stelle, zum Beispiel an der Zahnstange oder am Lenkgestänge angreifen und den Lenkwinkel begrenzen. Gleichwohl hat die in der Fig. 2 gezeigte Anordnung den Vorteil, dass bei der Ermittlung der maximalen Lenkwinkel bzw. der daraus gewonnenen zulässigen Lenkwinkel die Reifenbreite berücksichtigt wird. Wie unten noch näher ausgeführt ist, wird der zulässige Lenkwinkel, im Beispiel nach Fig. 2 der zulässige Lenkwinkel LW_{(rechts)}, von der Steuereinrichtung 12 (Fig. 1) rechnerisch ermittelt, wie dies unten im Detail beschrieben ist.

Zwischen zulässigem Lenkwinkel LW_{(rechts)} und maximalem Lenkwinkel LW_{max(rechts)} ist in Fig. 2 ein weiterer Winkel a eingezeichnet, der dazu herangezogen werden kann, sicherzustellen, dass der maximale Lenkwinkel LW_{max(rechts)}, der im Zuge des erfindungsgemäßen Verfahrens ermittelt werden muss, in einem zulässigen Bereich liegt. Dabei ist der Winkel a kleiner oder gleich dem Winkel, der theoretisch als kleinster vorkommender maximaler Lenkwinkel angenommen werden kann, wenn die bei Fertigung und Montage der Lenkung maximal auftretenden Toleranzen berücksichtigt werden. Ist der nach dem erfindungsgemäßen Verfahren ermittelte Lenkwinkel größer oder gleich dem Winkel a, ist er gültig ansonsten nicht. Daten die den Winkel a definieren sind in einem Speicher fest gespeichert, der im Zugriff der Steuereinrichtung 12 (Fig. 1) steht.

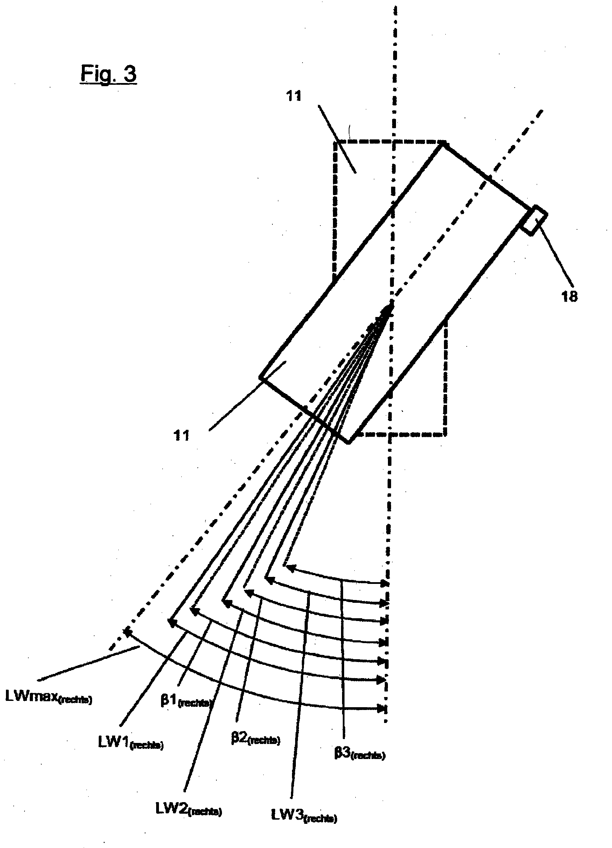

Wie bereits eingangs ausgeführt, ist der maximale Lenkwinkel - in der Fig. 2 der maximale Lenkwinkel LW_{max(rechts)} - lediglich eine Zwischengröße aus der wenigstens ein zulässiger Lenkwinkel LW_{(rechts)} ermittelt wird. Unter einem zulässigen Lenkwinkel wird hier verstanden, dass es sich um einen von der Steuereinrichtung zu errechnenden Lenkwinkel handelt, der sich aus dem maximal zulässigen Lenkwinkel LW_{max(rechts)} abzüglich eines Offset ergibt. Solche zulässigen Lenkwinkel LW1_{(rechts)} bis LW3_{(rechts)} sind in Fig. 3 dargestellt, wobei die Darstellung, hinsichtlich des Rades 11 und des Anschlags 18, der Darstellung in Fig. 2 entspricht.

Unterschiedliche zulässige Lenkwinkel werden dann ermittelt, wenn dies für unterschiedliche Fahrdynamikparameter vorgesehen ist. Dies wird regelmäßig dann der Fall sein, wenn beim Rangieren, im niedrigen Geschwindigkeitsbereich die zulässigen Lenkwinkel bis zum maximalen Lenkwinkel maximal ausgeschöpft werden sollen.

Aus dem Vorstehenden ergibt sich im Fall des Beispiels nach Fig. 3 einerseits, dass der maximale Lenkwinkel LW_{max(rechts)} ein zulässiger Lenkwinkel bei niedrigen Rangiergeschwindigkeiten sein kann und dass beliebig viele zulässige Lenkwinkel - im Beispiel nach Fig. 3 die zulässigen Lenkwinkel LW1_{(rechts)} bis LW3_{(rechts)} - für unterschiedliche Fahrdynamikparameter oder Kombinationen solcher Fahrdynamikparameter definierbar sind. Unter Kombinationen von Fahrdynamikparametern wird hierbei verstanden, dass zum Beispiel Geschwindigkeit oder eine beliebige Kombination von Fahrdynamikparametern zusammen betrachtet werden, so ergäben sich zum Beispiel für gleiche Geschwindigkeiten und unterschiedliche Motormomente unterschiedliche zulässige Lenkwinkel.

Es ist zu beachten, dass vorstehend in den Beispielen nach den Fig. 2 und 3 nur die Lenkrichtung "rechts" betrachtet ist, selbstverständlich sind die Verhältnisse bei der Lenkrichtung "links" analog übertragbar.

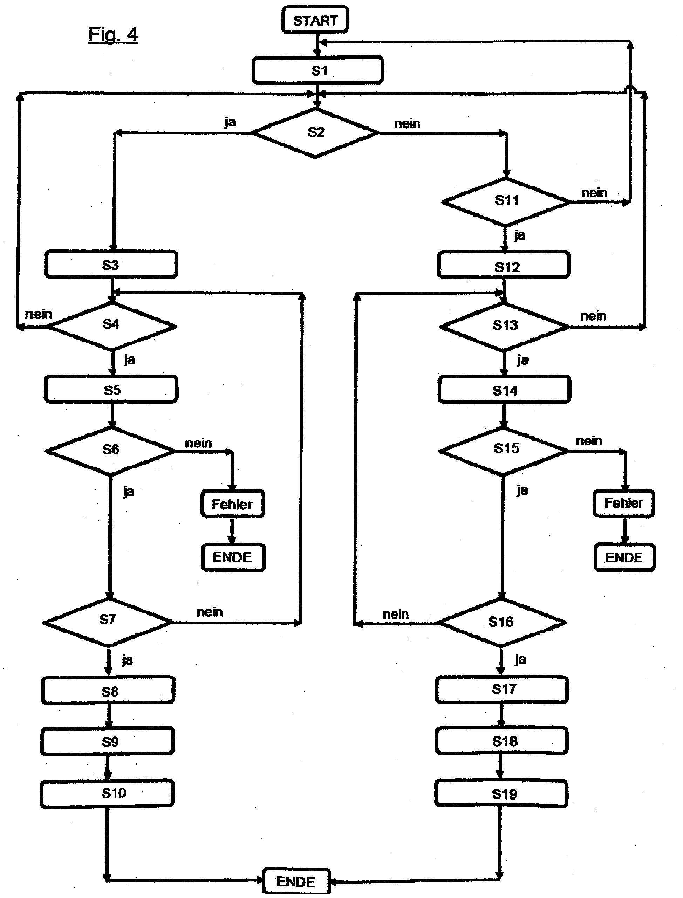

Nachdem vorstehend die apparativen Voraussetzungen und die relevanten Größen definiert sind, die im Zusammenhang mit dem Verfahren zum Anlernen der zulässigen Lenkwinkel LW1 bis LWn bei einer Überlagerungslenkeinrichtung von Bedeutung sind, soll nachfolgend, in Verbindung mit dem Ablaufdiagramm gemäß Fig. 4, das Verfahren selbst beispielhaft dargestellt werden. Die Steuerschritte in der Fig. 4 sind mit Bezugszeichen S1 bis S19 versehen, wobei nachfolgend zu diesen Steuerschritten, jeweils unter Angabe des Bezugszeichens des jeweiligen Steuerschrittes, die Beschreibung erfolgt.

Wie eingangs bereits erwähnt, wird die Routine zur Ermittlung der zulässigen Lenkwinkel LW durch einen Startbefehl initiiert. Dieser ist bevorzugt in einem Diagnosemodus, besonders bevorzugt über eine temporär anschließbare Serviceeinrichtung eingebbar. So ausgelöst startet die Routine mit einem ersten Schritt S1.
- Schritt S1:: Die Steuereinrichtung 12 fragt über das Bussystem 14 ab, ob die Fahrzeuggeschwindigkeit kleiner oder gleich Vₘₐₓ ist, wobei Vₘₐₓ die Geschwindigkeit ist, bis zu der die Routine ausgeführt werden darf. Wenn "ja", weiter mit Schritt S2, wenn "nein", Abbruch der Routine.
- Schritt S2:: Die Steuereinrichtung 12 fragt "Drehrichtung rechts" ab (Abfrage des Drehwinkelsensors 17); wenn "ja", weiter mit Schritt S3, wenn "nein", weiter mit Schritt S11.
- Schritt S3:: Die Steuereinheit 12 setzt einen Softwarezähler auf den Zählerstand "Z=Null"; Weiter mit Schritt S4.
- Schritt S4:: Die Steuereinrichtung 12 fragt "Drehmoment größer X" ab (Abfrage des Drehmomentsensors 16), wobei "X" ein von der Steuereinheit 12 aus einem Speicher abrufbarer fest vorgegebener Wert ist; wenn "ja", weiter mit Schritt S5, wenn "nein", weiter mit Schritt S2.
- Schritt S5:: Die Steuereinheit erhöht den Zählerstand des Softwarezählers um "1"; weiter mit Schritt S6.
- Schritt S6:: Die Steuereinheit 12 fragt ab, ob der am Drehwinkelgeber 17 anliegende Drehwinkel >= dem Winkel a ist, wobei a ein von der Steuereinheit 12 aus einem Speicher abrufbarer fest vorgegebener Wert "α" ist; wenn "jα", weiter mit Schritt S7, wenn "nein", Abbruch der Routine.
- Schritt S7:: Die Steuereinheit 12 fragt ab, ob der Softwarezähler auf dem Zählerstand "Z=Zₘₐₓ" steht, wobei "Zₘₐₓ" ein von der Steuereinheit 12 aus einem Speicher abrufbarer, fest vorgegebener Wert ist; wenn "ja", weiter mit Schritt S8, wenn "nein", weiter mit Schritt S4.
- Schritt S8:: Die Steuereinheit 12 fragt den am Drehwinkelgeber 17 anliegenden Drehwinkel ab und speichert diesen als maximaler Lenkwinkel LW_{max(rechts)}: weiter mit Schritt S9.
- Schritt S9:: Die Steuereinheit 12 berechnet aus dem maximalen Lenkwinkel LW_{max(rechts)} die zulässigen Lenkwinkel LW1_{(rechts)} bis LWn_{(rechts)}, indem sie von dem maximalen Lenkwinkel LW_{max(rechts)}, jeweils einzeln, verschiedene Offsetwerte subtrahiert, wobei die verschiedenen Offsetwerte aus einem Speicher abrufbare fest vorgegebene Werte sind. Sodann ordnet die Steuereinheit die errechneten zulässigen Lenkwinkel LW1_{(rechts)} bis LWn_{(rechts)} gespeicherten Lenkparametern zu, wobei die Offsetwerte bestimmend dafür sind, welche zulässigen Lenkwinkel LW1_{(rechts)} bis LWn_{(rechts)} zu welchen Lenkparametern gehören und speichert die zulässigen Lenkwinkel LW1_{(rechts)} bis LWn_{(rechts)} zu den Lenkparametern im Speicher 15 ab; weiter mit Schritt S10.
- Schritt S10:: Die Steuereinheit 12 zeigt den maximalen Lenkwinkel LW_{max(rechts)} mittels der Anzeige 19 an und beendet die Routine.
- Schritt S11:: Die Steuereinrichtung 12 fragt "Drehrichtung links" ab (Abfrage des Drehwinkelsensors 17); wenn "ja", weiter mit Schritt S12, wenn "nein", weiter mit Schritt S1.
- Schritt S12:: Steuereinheit 12 setzt einen Softwarezähler auf den Zählerstand "Z=Null"; weiter mit Schritt S13.
- Schritt S13:: Die Steuereinrichtung 12 fragt "Drehmoment größer X1" (Abfrage des Drehmomentsensors 16), wobei "X1" ein von der Steuereinheit 12 aus einem Speicher abrufbarer fest vorgegebener Wert ist; wenn "ja", weiter mit Schritt S14, wenn "nein", weiter mit Schritt S2.
- Schritt S14:: Die Steuereinheit 12 erhöht den Zählerstand des Softwarezählers um "1"; weiter mit Schritt S15.
- Schritt S15:: Die Steuereinheit 12 fragt ab, ob der am Drehwinkelgeber 17 anliegende Drehwinkel größer oder gleich dem Winkel a1 ist, wobei a1 ein von der Steuereinheit 12 aus einem Speicher abrufbarer, fest vorgegebener Wert "α1" ist; wenn "ja", weiter mit Schritt S16, wenn "nein", Fehlermeldung über eine Anzeige 19 (optisch und/oder akustisch) und Abbruch der Routine.
- Schritt S16:: Die Steuereinheit 12 fragt ab, ob der Softwarezähler auf dem Zählerstand "Z=Zₘₐₓ" steht, wobei "Zₘₐₓ" ein von der Steuereinheit 12 aus einem Speicher abrufbarer, fest vorgegebener Referenzwert ist; wenn "ja", weiter mit Schritt S17, wenn "nein", weiter mit Schritt S13.
- Schritt S17:: Die Steuereinheit 12 fragt den am Drehwinkelgeber 17 anliegende Drehwinkeln ab und speichert diesen als maximalen Lenkwinkel LWₘₐₓ₍ₗᵢₙₖₛ₎: weiter mit Schritt S18.
- Schritt S18:: Die Steuereinheit 12 berechnet aus dem maximalen Lenkwinkel LWₘₐₓ₍ₗᵢₙₖₛ₎ die zulässigen Lenkwinkel LW1₍ₗᵢₙₖₛ₎ bis LWn₍ₗᵢₙₖₛ₎, indem sie von dem maximalen Lenkwinkel LWₘₐₓ₍ₗᵢₙₖₛ₎, jeweils einzeln, verschiedene Offsetwerte subtrahiert, wobei die verschiedenen Offsetwerte aus einem Speicher abrufbare, fest vorgegebene Werte sind. Sodann ordnet die Steuereinheit 12 die errechneten zulässigen Lenkwinkel LW1₍ₗᵢₙₖₛ₎ bis LWn₍ₗᵢₙₖₛ₎ gespeicherten Lenkparametern zu, wobei die Offsetwerte bestimmend dafür sind, welche zulässigen Lenkwinkel LW1₍ₗᵢₙₖₛ₎ bis LWn₍ₗᵢₙₖₛ₎ zu welchen Lenkparametern gehören und speichert die zulässigen Lenkwinkel LW1₍ₗᵢₙₖₛ₎ bis LWn₍ₗᵢₙₖₛ₎ zu den Lenkparametern in Speicher 15 ab; Weiter mit Schritt S19.
- Schritt S19:: Die Steuereinheit 12 zeigt den maximalen Lenkwinkel LWn₍ₗᵢₙₖₛ₎ mittels der Anzeigeeinheit 19 an und beendet die Routine.

Der vorstehend beispielhaft beschriebene Verfahrensablauf ist natürlich in vielfältiger Weise abwandelbar, ohne dass davon die grundsätzliche Vorgehensweise berührt wäre, der Beispielcharakter ist daher besonders zu betonen.

## Patentansprüche

1. Verfahren zum Anlernen zulässiger Lenkwinkel bei einer Lenkeinrichtung eines Kraftfahrzeugs, wobei am Kraftfahrzeug mechanische und/oder softwareseitige, den Lenkwinkel begrenzende Anschläge (18) vorhanden oder temporär angebracht sind, wobei einerseits die auf das Lenkrad (3) aufgebrachte Lenkkraft und andererseits der am Eingang (5) des Lenkgetriebes anliegende Lenkwinkel direkt oder indirekt mittels Sensoren (16, 17) erfasst und ausgewertet werden, wobei
- die Lenkeinrichtung eine Überlagerungslenkung (1) mit einem Überlagerungsgetriebe (6) ist, wobei dem durch das Betätigen eines Lenkrades (3) erzeugten Lenkwinkel, gesteuert durch eine Steuereinrichtung (12), mittels des Überlagerungsgetriebes (6) ein Überlagerungslenkwinkel aufgeprägt ist, der den Lenkwinkel abhängig von gemessenen Fahrdynamikparametern vergrößert oder verkleinert,
- ein Speicher (15) vorgesehen ist, auf welchen die die Überlagerungslenkung (1) steuernde Steuereinrichtung (12) Zugriff hat und in dem Lenkparameter für unterschiedliche Fahrdynamikparameter gespeichert sind, und wobei in dem Speicher (15) Informationen über wenigstens einen zulässigen Lenkwinkel (LW1_{(rechts)} bis LWn_{(rechts)}, LW1₍ₗᵢₙₖₛ₎ bis LWn₍ₗᵢₙₖₛ₎) in jede Lenkrichtung gespeichert sind,
- in einer mit Hilfe der Steuereinrichtung (12) ablaufenden Anlernroutine auf das Lenkrad (3) in beiden Lenkrichtungen manuell eine Lenkkraft aufgebracht wird und deren Wert direkt oder indirekt erfasst wird und dann, wenn die aufgebrachte Lenkkraft jeweils einen vorgegebenen Wert übersteigt, nach Verstreichen einer vorgegebenen Zeitspanne, der am Ausgang des Überlagerungsgetriebes (6) anliegende Lenkwinkel direkt oder indirekt von der Steuereinrichtung (12) erfasst und als absoluter maximaler Lenkwinkel (LW_{max(rechts)}, LWₘₐₓ₍ₗᵢₙₖₛ₎) in die jeweilige Lenkrichtung definiert wird (Schritt S8, Schritt S17),
- nach Ermittlung der absoluten maximalen Lenkwinkel (LW_{max(rechts)}, LWₘₐₓ₍ₗᵢₙₖₛ₎) in beiden Drehrichtungen des Lenkrades (3), jeweils wenigstens ein zulässiger Lenkwinkel (LW1_{(rechts)} bis LWn_{(rechts)}, LW1₍ₗᵢₙₖₛ₎ bis LWn₍ₗᵢₙₖₛ₎) mittels der Steuereinrichtung (12) errechnet wird,
- der in jede Lenkrichtung wenigstens eine errechnete zulässige Lenkwinkel (LW1_{(rechts)} bis LWn_{(rechts)}, LW1₍ₗᵢₙₖₛ₎ bis LWn₍ₗᵢₙₖₛ₎) den gespeicherten Lenkparametern zugeordnet und im Speicher (15) gespeichert wird (Schritt S9, Schritt S18).

2. Verfahren nach Anspruch 1, **dadurch gekennzeichnet, dass** unterschiedliche Lenkparameter im Speicher (15) gespeichert sind und dass unterschiedliche errechnete zulässige Lenkwinkel (LW1_{(rechts)} bis LWn_{(rechts)}, LW1₍ₗᵢₙₖₛ₎ bis LWn₍ₗᵢₙₖₛ₎) durch die Steuereinrichtung (12) den gespeicherten Lenkparametern zugeordnet werden (Schritt S9, Schritt S18).

3. Verfahren nach Anspruch 1 oder 2, **dadurch gekennzeichnet, dass** die errechneten zulässigen Lenkwinkel (LW1_{(rechts)} bis LWn_{(rechts)}, LW1₍ₗᵢₙₖₛ₎ bis LWn₍ₗᵢₙₖₛ₎) für unterschiedliche Geschwindigkeiten des Kraftfahrzeugs unterschiedlich sind.

4. Verfahren nach einem der vorhergehenden Ansprüche, **dadurch gekennzeichnet, dass** vor dem Erfassen eines absoluten maximalen Lenkwinkels (LW_{max(rechts)}, LWₘₐₓ₍ₗᵢₙₖₛ₎) durch die Steuereinrichtung (12) geprüft wird, ob der erfasste Lenkwinkel größer oder gleich einem vordefinierten Winkel (a, a1) ist und dass in dem Fall, dass der erfasste Lenkwinkel größer oder gleich dem vordefinierten Winkel (a, a1) ist und nach Verstreichen einer vorgegebenen Zeitspanne, der am Ausgang des Überlagerungsgetriebes (6) anliegende Lenkwinkel von der Steuereinrichtung (12) erfasst und als absoluter maximaler Lenkwinkel (LW_{max(rechts)}, LWₘₐₓ₍ₗᵢₙₖₛ₎) definiert wird und dass in dem Fall, dass der erfasste Lenkwinkel kleiner als der vordefinierte Winkel (a, a1) ist, die Steuereinrichtung (12) die Anlernroutine abbricht und eine Fehlermeldung ausgibt (Schritte S6, S7, S8, Schritte S15, S16, S17).

5. Verfahren nach einem der vorhergehenden Ansprüche, **dadurch gekennzeichnet, dass** zur Erfassung der Zeitspanne ein Zähler verwendet wird, wobei der Zähler entweder auf den Zählerstand "Null" gesetzt und dann zyklisch inkrementiert und zyklisch mit einem gespeicherten Referenzwert verglichen wird oder auf einen gespeicherten Referenzwert gesetzt und zyklisch dekrementiert wird und zyklisch mit dem Wert "Null" verglichen wird und dass bei Erreichen des Referenzwertes oder des Wertes "Null", der am Ausgang des Überlagerungsgetriebes (6) anliegende und von der Steuereinrichtung (12) erfasste Lenkwinkel als absoluter maximaler Lenkwinkel (LW_{max(rechts)}, LWₘₐₓ₍ₗᵢₙₖₛ₎) definiert wird (Schritte S3, S7, S8, Schritte S12, S16, S17).

6. Verfahren nach einem der vorhergehenden Ansprüche, **dadurch gekennzeichnet, dass** die Anlernroutine, durch die Steuereinrichtung (12) überwacht, bei einer Fahrzeuggeschwindigkeit Vₘₐₓ kleiner 20 Kilometer pro Stunde, bevorzugt kleiner 10 Kilometer pro Stunde durchgeführt wird, wobei die Geschwindigkeit "Null Kilometer pro Stunde" zu diesem Bereich zählt (Schritt S1).

7. Verfahren nach einem der vorhergehenden Ansprüche, **dadurch gekennzeichnet, dass** nach dem Erfassen der absoluten maximalen Lenkwinkel (LW_{max(rechts)}, LWₘₐₓ₍ₗᵢₙₖₛ₎), diese vor Beendigung der Anlernroutine mittels einer von der Steuereinrichtung (12) ansteuerbaren Anzeigeeinrichtung (19) angezeigt werden (Schritt S10, Schritt S19).

8. Verfahren nach einem der vorhergehenden Ansprüche, **dadurch gekennzeichnet, dass** in der Überlagerungslenkung (1) ein durch die Lenkkraft beaufschlagter Eingang (5) angeordnet ist und die während der Anlernroutine auf das Lenkrad aufgebrachte Lenkkraft am Eingang (5) der Überlagerungslenkung mittels eines Drehmomentsensors (16) durch die Steuereinrichtung (12) erfasst wird, wobei der erfasste Wert bei konstantem Lenkwinkel direkt proportional dem Lenkmoment und damit direkt proportional der Lenkkraft ist, die auf das Lenkrad (3) aufgebracht wird.

9. Verfahren nach einem der vorhergehenden Ansprüche, **dadurch gekennzeichnet, dass** der Lenkwinkel mittels eines Drehwinkelsensors (17) am Ausgang des Überlagerungslenkgetriebes (6) erfasst wird.

10. Verfahren nach einem der vorhergehenden Ansprüche, **dadurch gekennzeichnet, dass** die Anlernroutine zum Anlernen der zulässigen Lenkwinkel (LW1_{(rechts)} bis LWn_{(rechts)}, LW1₍ₗᵢₙₖₛ₎ bis LWn₍ₗᵢₙₖₛ₎) nur in einem Diagnosemodus durch die Steuereinrichtung (12) ausführbar ist.

11. Kraftfahrzeug mit einer Überlagerungslenkung (1), die ein Überlagerungsgetriebe (6) umfasst, wobei eine Steuereinrichtung (12) für die Überlagerungslenkung (1) und ein Speicher (15) vorgesehen sind, wobei das Verfahren nach einem der Ansprüche 1 bis 10 durchgeführt wird.

## Claims

1. Method for learning an admissible steering angle by a vehicle steering device, wherein mechanical and/or software-based stops (18) limiting the steering angle are present or temporarily mounted on the vehicle, wherein, on the one hand, the steering force applied to the steering wheel (3) and, on the other hand, the steering angle on the input (5) of the steering gear is directly or indirectly recorded and analysed by means of sensors (16, 17), wherein
- the steering device is a superimposed steering system (1) with a superimposition gearbox (6), wherein the steering angle generated by operating a steering wheel (3), controlled by a control device (12), imposes a superimposed steering angle by means of the superimposition gearbox (6), which increases or decreases the steering angle depending on the measured driving dynamics parameters,
- a memory (15) is provided, to which the control device (12) controlling the superimposed steering system (1) has access and in which steering parameters for different driving dynamics parameters are stored, and wherein information on at least one admissible steering angle (LW1_{(right)} to LWn_{(right)}, LW1_{(left)} to LWn_{(left)}) in each steering direction is stored in the memory (15),
- in a learning routine executed by means of the control device (12) a steering force is manually applied to the steering wheel (3) in both steering directions and its value directly or indirectly recorded and then, if the steering force applied exceeds a respective predetermined value, after a specified period of time has elapsed, the steering angle at the output of the superimposition gearbox (6) is directly or indirectly recorded by the control device (12) and defined as the absolute maximum steering angle (LW_{max(right)}, LW_{max(left)}) in the respective steering direction (Step S8, Step S17),
- after determining the absolute maximum steering angle (LW_{max(right)}, LW_{max(left)}) in both rotation directions of the steering wheel (3), at least one respective admissible steering angle (LW1_{(right)} to LWn_{(right)}, LW1_{(left)} to LWn_{(left)}) is calculated by means of the control device (12),
- the at least one calculated admissible steering angle in each steering direction (LW1_{(right)} to LWn_{(right)}, LW1_{(left)} to LWn_{(left)}) is assigned to the stored steering parameters and stored in the memory (15) (Step S9, Step S18).

2. Method according to claim 1 **characterised in that** different steering parameters are stored in the memory (15) and that different admissible steering angles (LW1_{(right)} to LWn_{(right)}, LW1_{(left)} to LWn_{(left)}) calculated by the control device (12) are assigned to the stored steering parameters (Step S9, Step S18).

3. Method according to claim 1 or 2 **characterised in that** the calculated admissible steering angles (LW1_{(right)} to LWn_{(right)}, LW1_{(left)} to LWn_{(left)}) are different for different vehicle speeds.

4. Method according to any of the preceding claims **characterised in that** before recording an absolute maximum steering angle (LW_{max(right)}, LW_{max(left)}) the control device (12) checks whether the recorded steering angle is greater than or equal to a predefined angle (a, a1) and that, in the event that the recorded steering angle is greater than or equal to the predefined angle (α, α1) and after a specified period of time has elapsed, the steering angle at the output of the superimposition gearbox (6) is recorded by the control device (12) and defined as the absolute maximum steering angle (LW_{max(right)}, LW_{max(left)}) and that, in the event that the recorded steering angle is smaller than the predefined angle (α, α1), the control device (12) interrupts the learning routine and issues an error message (Steps S6, S7, S8, Steps S15, S16, S17).

5. Method according to any of the preceding claims **characterised in that** a counter is used to record the period of time, wherein the counter is either set to a reading of "Zero" and then incremented cyclically and cyclically compared with a stored reference value or set to a stored reference value and decremented cyclically and cyclically compared with the "Zero" value and that, when the reference value or the "Zero" value is reached, the steering angle at the output of the superimposition gearbox (6) and recorded by the control device (12) is defined as the absolute maximum steering angle (LW_{max(right)}, LW_{max(left)}) (Steps S3, S7, S8, Steps S12, S16, S17).

6. Method according to any of the preceding claims **characterised in that** the learning routine, monitored by the control device (12), is executed at a vehicle speed Vₘₐₓ of less than 20 kilometres per hour, preferably of less than 10 kilometres per hour, wherein the speed of "Zero kilometres per hour" is included in this range (Step S1).

7. Method according to any of the preceding claims **characterised in that** after recording the absolute maximum steering angle (LW_{max(right)}, LW_{max(left)}), the latter is displayed before completing the learning routine by means of a display (19), which can be controlled by the control device (12) (Step S10, Step S19).

8. Method according to any of the preceding claims **characterised in that** an input (5) activated by the steering force is located within the superimposed steering system (1) and that, during the learning routine, the steering force applied to the steering wheel at the input (5) of the superimposed steering system is recorded by means of a torque sensor (16) by the control device (12), wherein the recorded value at a constant steering angle is directly proportional to the steering torque and thereby directly proportional to the steering force, which is applied to the steering wheel (3).

9. Method according to any of the preceding claims **characterised in that** the steering angle is recorded by means of a rotation angle sensor (17) at the output of the superimposition gearbox (6).

10. Method according to any of the preceding claims **characterised in that** the learning routine for learning the admissible steering angle (LW1_{(right)} to LWn_{(right)}, LW1_{(left)} to LWn_{(left)}) can only be executed in diagnostic mode by the control device (12).

11. Vehicle with a superimposed steering system (1), comprising a superimposition gearbox (6), wherein a control device (12) for the superimposed steering system (1) and a memory (15) are provided, wherein the method according to any one of the claims 1 to 10 is implemented.

## Revendications

1. Procédé pour l'apprentissage d'angles de braquage admissibles d'un dispositif de direction de véhicule, dans lequel des butées (18) limitant l'angle de braquage, côté logiciel et/ou mécaniques sont présentes ou montées temporairement sur le véhicule, dans lequel d'une part la force de direction exercée sur le volant (3) et d'autre part l'angle de braquage appliqué à l'entrée (5) de la transmission de direction sont détectés directement ou indirectement au moyen de capteurs (16, 17) et évalués, dans lequel
- le dispositif de direction est une direction à superposition (1) avec une transmission à superposition (6), dans lequel un angle de braquage à superposition est imprimé à l'angle de braquage généré par l'actionnement d'un volant (3), de façon commandée par un dispositif de commande (12), au moyen de la transmission à superposition (6), qui augmente ou diminue l'angle de braquage en fonction de paramètres de dynamique de conduite mesurés,
- une mémoire (15) est prévue, à laquelle le dispositif de commande (12) commandant la direction à superposition (1) a accès et dans laquelle des paramètres de direction sont enregistrés pour différents paramètres de dynamique de conduite, et dans lequel des informations sur au moins un angle de braquage admissible (LW1_{(droite)} à LWn_{(droite)}, LW1_{(gauche)} à LWn_{(gauche)}) dans chaque direction de braquage sont enregistrées dans la mémoire (15),
- dans une routine d'apprentissage se déroulant à l'aide du dispositif de commande (12), une force de direction est exercée manuellement sur le volant (3) dans les deux directions de braquage et sa valeur est détectée directement ou indirectement et ensuite, lorsque la force de direction exercée dépasse respectivement une valeur prédéfinie, après écoulement d'un laps de temps prédéfini, l'angle de braquage appliqué à la sortie de la transmission à superposition (6) est détecté directement ou indirectement par le dispositif de commande (12) et défini en tant qu'angle de braquage maximum absolu (LW_{max(droite)}, LW_{max(gauche)}) dans la direction de braquage respective (étape S8, étape S17),
- après détermination des angles de braquage maximum absolus (LW_{max(droite)}, LW_{max(gauche)}) dans les deux sens de rotation du volant (3), respectivement au moins un angle de braquage admissible (LW1_{(droite)} à LWn_{(droite)}, LW1_{(gauche)} à LWn_{(gauche)}) est calculé au moyen du dispositif de commande (12),
- l'au moins un angle de braquage admissible calculé (LW1_{(doite)} à LWn_{(droite)}, LW1_{(gauche)} à LWn_{(gauche)}) dans chaque direction de braquage est affecté aux paramètres de direction enregistrés et est enregistré dans la mémoire (15) (étape S9, étape S18).

2. Procédé selon la revendication 1, **caractérisé en ce que** différents paramètres de direction sont enregistrés dans la mémoire (15) et que différents angles de braquage admissibles calculés (LW1_{(droite)} à LWn_{(droite)}, LW1_{(gauche)} à LWn_{(gauche)}) sont affectés aux paramètres de direction enregistrés par le dispositif de commande (12) (étape S9, étape S18).

3. Procédé selon la revendication 1 ou 2, **caractérisé en ce que** les angles de braquage admissibles calculés (LW1_{(droite)} à LWn_{(droite)}, LW1_{(gauche)} à LWn_{(gauche)}) sont différents pour différentes vitesses du véhicule.

4. Procédé selon l'une quelconque des revendications précédentes, **caractérisé en ce qu'**il est vérifié avant la détection d'un angle de braquage maximum absolu (LW_{max(droite)}, LW_{max(gauche)}) par le dispositif de commande (12) si l'angle de braquage détecté est supérieur ou égal à un angle prédéfini (α, α1) et que dans le cas où l'angle de braquage détecté est supérieur ou égal à l'angle prédéfini (α, α1) et après écoulement d'un laps de temps prédéfini, l'angle de braquage appliqué à la sortie de la transmission à superposition (6) est détecté par le dispositif de commande (12) et défini en tant qu'angle de braquage maximum absolu (LW_{max(droite)}, LW_{max(gauche)}) et que dans le cas où l'angle de braquage détecté est inférieur à l'angle prédéfini (α, α1), le dispositif de commande (12) interrompt la routine d'apprentissage et émet un message d'erreur (étapes S6, S7, S8, étapes S15, S16, S17).

5. Procédé selon l'une quelconque des revendications précédentes, **caractérisé en ce qu'**un compteur est utilisé pour détecter le laps de temps, dans lequel le compteur est soit réglé sur la valeur de compteur « zéro » et incrémenté cycliquement et comparé cycliquement avec une valeur de référence enregistrée soit réglé sur une valeur de référence enregistrée et décrémenté cycliquement et comparé cycliquement avec la valeur « zéro » et que lorsque la valeur de référence ou la valeur « zéro » est atteinte, l'angle de braquage appliqué à la sortie de la transmission à superposition (6) et détecté par le dispositif de commande (12) est défini en tant qu'angle de braquage maximum absolu (LW_{max(droite)}, LW_{max(gauche)}) (étapes S3, S7, S8, étapes S12, S16, S17).

6. Procédé selon l'une quelconque des revendications précédentes, **caractérisé en ce que** la routine d'apprentissage est surveillée par le dispositif de commande (12), à une vitesse de véhicule Vₘₐₓ inférieure à 20 kilomètres par heure, de préférence inférieure à 10 kilomètres par heure, dans lequel la vitesse « zéro kilomètre par heure » fait partie de cette plage (étape S1).

7. Procédé selon l'une quelconque des revendications précédentes, **caractérisé en ce qu'**après la détection des angles de braquage maximum absolus (LW_{max(droite)}, LW_{max(gauche)}), ceux-ci sont affichés avant la fin de la routine d'apprentissage au moyen d'un dispositif d'affichage (19) pouvant être commandé par le dispositif de commande (12) (étape S10, étape S19).

8. Procédé selon l'une quelconque des revendications précédentes, **caractérisé en ce qu'**une entrée (5) sollicitée par la force de direction est agencée dans la direction à superposition (1) et la force de direction exercée pendant la routine d'apprentissage sur le volant est détectée à l'entrée (5) de la direction à superposition au moyen d'un capteur de couple (16) par le dispositif de commande (12), dans lequel la valeur détectée à angle de braquage constant est directement proportionnelle au couple de braquage et ainsi directement proportionnelle à la force de direction, qui est exercée sur le volant (3).

9. Procédé selon l'une quelconque des revendications précédentes, **caractérisé en ce que** l'angle de braquage est détecté au moyen d'un détecteur d'angle de rotation (17) à la sortie de la transmission à superposition (6).

10. Procédé selon l'une quelconque des revendications précédentes, **caractérisé en ce que** la routine d'apprentissage pour l'apprentissage des angles de braquage admissibles (LW1_{(droite)} à LWn_{(droite)}, LW1_{(gauche)} à LWn_{(gauche)}) peut uniquement être réalisée dans un mode de diagnostic par le dispositif de commande (12).

11. Véhicule avec une direction à superposition (1), qui comprend une transmission à superposition (6), dans lequel un dispositif de commande (12) pour la direction à superposition (1) et une mémoire (15) sont prévus, dans lequel le procédé est réalisé selon l'une quelconque des revendications 1 à 10.
